# EUROPÄISCHE PATENTSCHRIFT

(11) **EP 1 389 810 B1**
(45) Veröffentlichungstag und Bekanntmachung des Hinweises auf die Patenterteilung: **01.10.2008**
(21) Anmeldenummer: 03012469.7
(22) Anmeldetag: 31.05.2003
(51) Int. Cl.: H01R 25/00, H01R 31/00, H05K 7/20

(54) **Gerät eines elektronischen Überwachungssystems, insbesondere eines Videoüberwachungssystems**
Device for an electronic monitoring system, specially for a video monitoring system
Dispositif pour un système électronique de surveillance, en particulier pour un système de surveillance vidéo

(30) Priorität: 16.08.2002 DE 10238333
(43) Veröffentlichungstag der Anmeldung: 18.02.2004
(73) Patentinhaber: Dallmeier electronic GmbH & Co. KG., 93051 Regensburg (DE)
(72) Erfinder: Dallmeier, Dieter, 93186 Pettendorf (DE)
(74) Vertreter: Graf, Helmut

(56) Entgegenhaltungen:
- DE-A- 4 206 543
- DE-A- 10 051 643
- DE-A- 19 621 152
- DE-A- 19 700 065
- US-A- 5 646 823
- US-A- 5 807 140
- US-A- 5 816 859
- US-B1- 6 297 745
- US-B1- 6 297 950
- US-B1- 6 411 503

## Beschreibung

Die Erfindung bezieht sich auf ein Videoüberwachungssystem gemäß Patentanspruch 1.

Überwachungsanlagen oder -systeme, insbesondere auch solche mit einer Vielzahl von Sensoren, Meldern oder Videokameras zur Überwachung von Objekten sind in unterschiedlichsten Ausführungen bekannt. Bekannt sind insbesondere auch Geräte für solche Anlagen, die an einer Seite eines Gehäuses und dabei vorzugsweise an der Rückseite dieses Gehäuses eine Vielzahl von äußeren Anschlüssen aufweisen, die ein Anschlussfeld bilden, an welches eine Vielzahl von äußeren Sensoren, Meldern und/oder Kameras angeschlossen werden kann. Die Belegung der äußeren Anschlüsse ist dabei grundsätzlich frei wählbar und erfolgt in der Regel entsprechend einem gewünschten oder vorgegebenen Überwachungsprogramm, in welchem dann die gewählte Belegung berücksichtigt ist.

Ist es nun erforderlich, dass betreffende Gerät wegen eines Defektes oder einer notwendigen Wartung usw. gegen ein anderes Gerät auszutauschen, so ist es bisher notwendig, sämtliche an die äußeren Anschlüsse führenden Leitungen von diesen Anschlüssen zu trennen und nach dem Auswechseln des Gerätes diese Verbindungen der ursprünglichen Belegung der Anschlüsse entsprechend wieder herzustellen. Dies ist nicht nur zeitaufwendig, sondern kann auch zu erheblichen Fehlern führen.

Bekannt ist beispielsweise bei Rechnern (US-A-5 816 859), das äußere Anschlussfeld bildende Mehrfachbuchsen an einer die Außenseite eines Gehäuses bildenden Platte vorzusehen, die zusätzlich zu den das äußere Anschlussfeld bildenden Mehrfachbuchsen eine mehrfachbuchsenartige Kontaktleiste aufweist, deren Kontakte bei am Rechnergehäuse befestigtem Anschlussfeld mit stiftartigen Kontakten an Leiterplatten des Rechners verbunden sind. Es besteht die Möglichkeit, die Platte auszutauschen, wobei dem hierfür notwendigen Entfernen der am Gehäuse vorhandenen Platte das Gehäuse geöffnet wird, was bei Geräten von sicherheitsrelevanten Überwachungsanlagen nicht zulässig ist.

Aufgabe der Erfindung ist es, ein Videoüberwachungssystem aufzuzeigen, welches eine umständliche Wiederherstellung der Verbindung der äußeren Anschlussleitungen bei einem Geräteaustausch vermeidet. Zur Lösung dieser Aufgabe ist ein Videoüberwachungssystem entsprechend dem Patentanspruch 1 ausgebildet.

Weiterbildungen der Erfindung sind Gegenstand der Unteransprüche. Bei dem erfindungsgemäßen Videoüberwachungssystem sind an dem wenigstens einen Gerät die äußeren Anschlüsse des Anschlußfeldes, die zumindest teilweise von Anschlüssen für Koax-Kabel gebildet sind, an dem abnehmbaren Segment vorgesehen, welches seinerseits über trennbare elektriche Mehrfachverbindungen in Form von Mehrfachsteckern und zugehörigen Buchsen mit dem Gerät verbunden ist. Innerhalb des Segmentes sind die äußeren Anschlüsse fest mit den Anschlüssen wenigstens eines elektrischen segmentseitigen Mehrfachverbindungselementes (Mehrfachstecker oder Mehrfachsteckerbuchse) verbunden, und zwar derart, daß über dieses segmentseitige Mehrfachverbindungsstück eine konkrete feste Zuordnung jedes äußeren Anschlusses des Anschlußfeldes mit einem geräteinternen Ein- oder Ausgang besteht.

Beim Auswechseln des Gerätes wird lediglich das Segment, welches Teil der Gehäusewand, beispielsweise Teil der Gehäuserückwand ist, vom Gehäuse entfernt, und zwar unter Beibehaltung der Verbindungen mit den äußeren Anschlüssen. Nach dem Auswechseln des Gerätes wird das Segment an dem neuen Gerät befestigt, wobei über die segmentseitigen und geräteseitigen Mehrfachverbindungen wiederum sämtliche äußeren Sensoren, Melder, Kameras usw. mit den richtigen Eingängen des Gerätes verbunden sind.

Das Segment kann in einer sehr flachen Form gefertigt werden, so daß sich durch dieses Segment praktisch kein zusätzlicher Platzbedarf entsteht. Die Erfindung wird im Folgenden anhand der Figuren an Ausführungsbeispielen näher erläutert. Es zeigen:
- Fig. 1 - 3: jeweils in perspektivischer Darstellung die Rückseite des geöffneten Gehäuses eines Gerätes für eine Videoüberwachung, in unterschiedlichen Zuständen des als Adapter ausgebildeten Segmentes der Gehäuserückwand;
- Fig. 4: in sehr vereinfachter Darstellung eine Verrastung für das Segment der Gehäuserückwand;
- Fig. 5: in perspektivischer Teildarstellung das geöffnete Gehäuse in einer Ansicht auf die Innenfläche der Gehäuserückseite im Bereich des Rückwandsegmentes;
- Fig. 6 und 7: in perspektivischer Teildarstellung die Gehäusefrontseite im Bereich einer Lüftungsöffnung mit einer zum Auswechseln eines Luftfilters klappbaren Blende, und zwar bei geschlossener Blende (Figur 6) und bei geöffneter Blende (Figur 7).

In den Figuren ist 1 ein Gerät, welches Bestandteil eines elektronischen Video-Überwachungssystems ist, welches eine Vielzahl von Überwachungs-Kameras (Video-Kameras) aufweist und mit welchem ein oder mehrere Objekte überwacht werden können. Das Gerät 1 dient beispielsweise im einfachsten Fall dazu, die von den einzelnen Kameras bei einer Real-Time-Überwachung gelieferten Videosignale in digitale Signale umzuwandeln und dann beispielsweise in geeigneten Speichermedien des Gerätes oder anderer, zusätzlicher Geräte abzuspeichern, für bestimmte Überwachungsfunktionen das jeweils aktuelle, von einer Videokamera aufgenommene Bild mit bereits vorhandenen, von der gleichen Kamera aufgenommenen Bildern zu vergleichen usw. Auch andere komplexere Funktionen sind für das Gerät 1 und ggfs. für weitere mit diesen Gerät in Verbindung stehende Geräte des Systems denkbar.

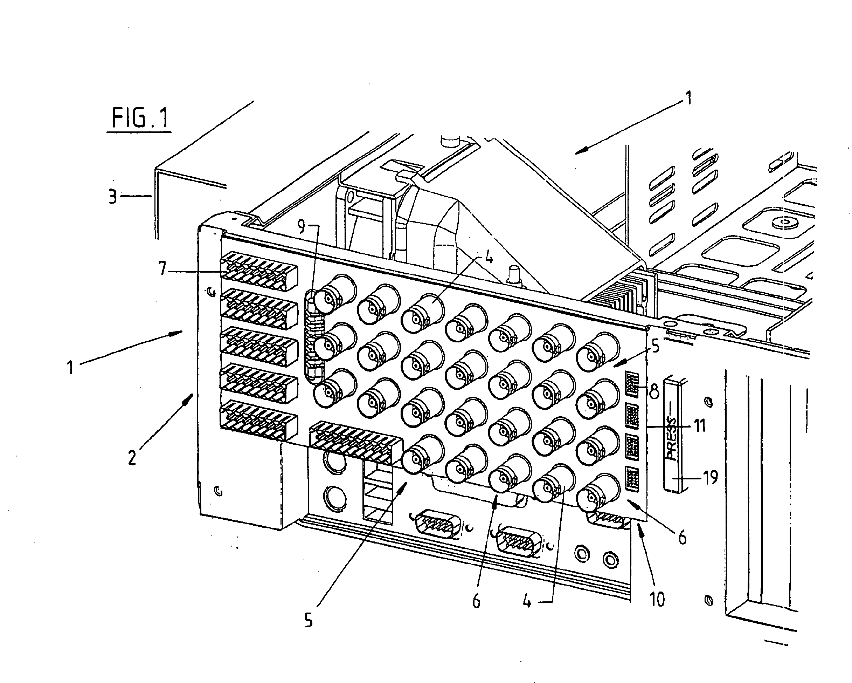

Die Funktionselemente des Gerätes 1 sind in einem flachen quaderförmigen Gehäuse 2 untergebracht, welches ähnlich dem Gehäuse eines Rechners oder PC hergestellt und in den Figuren 1 - 4 jeweils im geöffenten Zustand wiedergegeben ist. Im praktischen Einsatz des Gerätes 1 ist das Gehäuse 2 durch ein aus Flachmaterial, beispielsweise aus Stahlblech durch Biegen hergestelltes Gehäuseteil verschlossen, wie es in der Figur 1 bei 3 angedeutet ist.

Die Figuren 1 - 3 zeigen jeweils das Gehäuse 2 in Rückansicht. An der Rückseite 2.1 des Gehäuses 2 sind die unterschiedlichsten Anschlüsse vorgesehen, insbesondere auch eine Vielzahl von Anschlüssen 4 in Form von BNC-Buchsen, an die jeweils über einen entsprechenden BNC-Verbindungsstecker und eine Koax-Leitung eine Videokamera anschließbar ist. Bei der dargestellten Ausführungsform bilden die Anschlüsse 4 ein Anschlußfeld 5 mit insgesamt sechsundzwanzig Anschlüssen 4, die individuell mit den zugehörigen Kameras belegt werden. Eine Besonderheit des Gerätes 1 besteht nun darin, daß die das Anschlußfeld 5 für die Kameras bildenden Anschlüsse 4 an einem Segment 6 der Gehäuserückwand 2.1 vorgesehen sind, und zwar zusammen mit weiteren Anschlüssen 7 und 8 für Mehrfachstecker oder -buchsen und mit einer Sensoranordnung 9, die wenigstens einen Lufttemperatur- und/oder Feuchtigkeitssensor enthält. Das Gehäusesegment 6 bildet ein flaches, plattenförmiges Gehäuse 10, welches in dem in der Figur 1 dargestellten Zustand in einer Ausnehmung 11 an der Rückseite 2.1 des Gehäuses 2 derart aufgenommen und verriegelt ist, daß die das Anschlußfeld 5 aufweisende Oberflächenseite 10.1 des flachen Gehäuses 10 in einer Ebene oder im wesentlichen in einer Ebene mit der übrigen Rückseite 2.1 des Gehäuses liegt und die andere Oberflächenseite 10.2 des flachen Gehäuses 10 einer Gehäusewand 12 benachbart liegt, die die Ausnehmung 11 zur Innenseite des Gehäuses 2 hin abschließt.

An der dem Anschlußfeld 5 abgewandten Seite 10.2 sind Mehrfachverbindungselemente (Mehrfachstecker oder -buchsen) vorgesehen, die mit entsprechenden Verbindungselementen an der Geäusetrennwand 12 zusammenwirken. Der einfacheren Darstellung wegen ist in den Figuren lediglich ein derartiges Mehrfachverbindungselement in Form einer Mehrfachsteckerbuchse 13 wiedergegeben. Grundsätzlich können auch an der Gehäusetrennwand 12 mehrere derartige Mehrfachverbindungselemente vorgesehen sein, die dann jeweils mit einem entsprechenden Verbindungselement an der Rückseite 10.2 des Gehäuses 10 zusammenwirken.

Innerhalb des Gehäuses 10 besteht eine feste Verdrahtung bzw. elektrische Verbindung zwischen den Anschlüssen 7 und 8 und den mit den Mehrfachanschlüssen 13 an der Gehäusetrennwand zusammenwirkenden Mehrfachanschlüssen an der Rückseite 10.2 des Gehäuses 10, insbesondere aber auch eine feste, vorgegebene Verbindung zwischen den Anschlüssen 4 und diesen Mehrfachanschlüssen an der Rückseite 10.2 des Gehäuses, so daß geräteintern jeder Anschluß 4 einem bestimmten Anschluß bzw. Eingang des Mehrfachanschlusses 13 fest zugeordnet ist. Auch der wenigstens eine Sensor der Sensoranordnung 9 ist über einen mit einem Mehrfachanschluß 13 zusammenwirkenden Anschluß an der Rückseite 10.2 des Gehäuses 10 mit der Elektronik des Gerätes 1 verbunden.

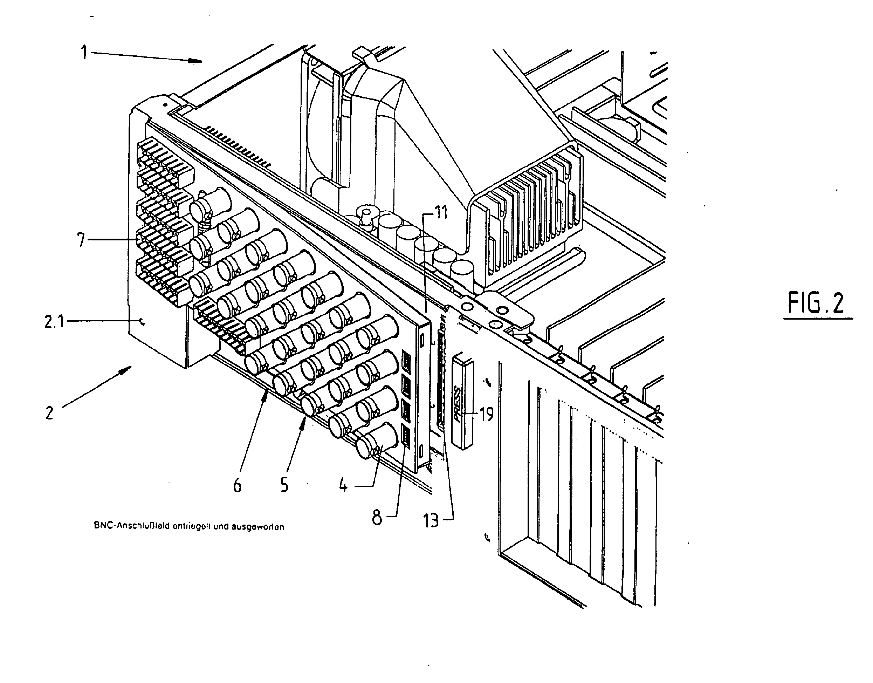

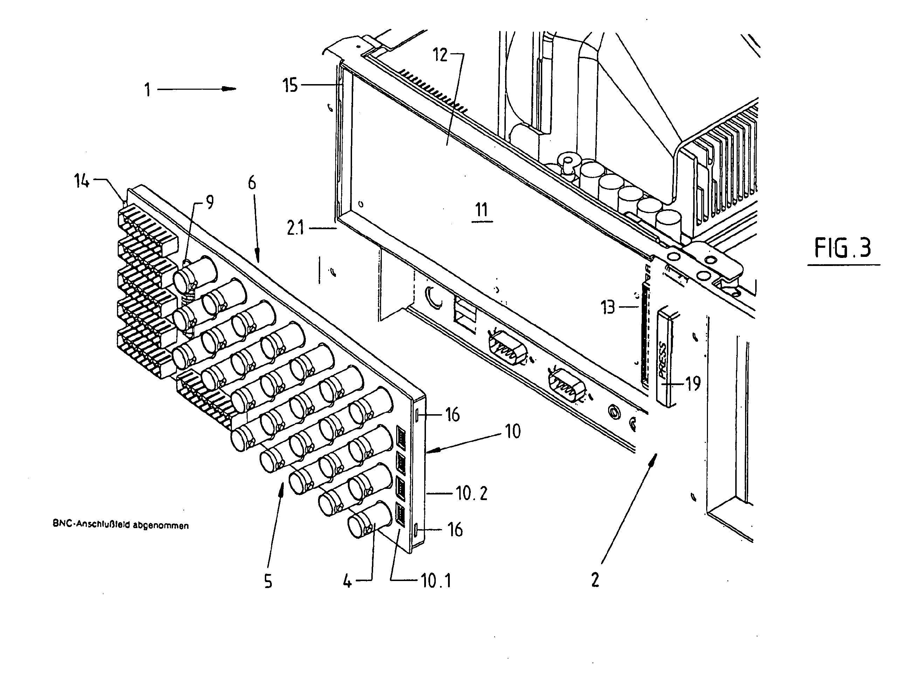

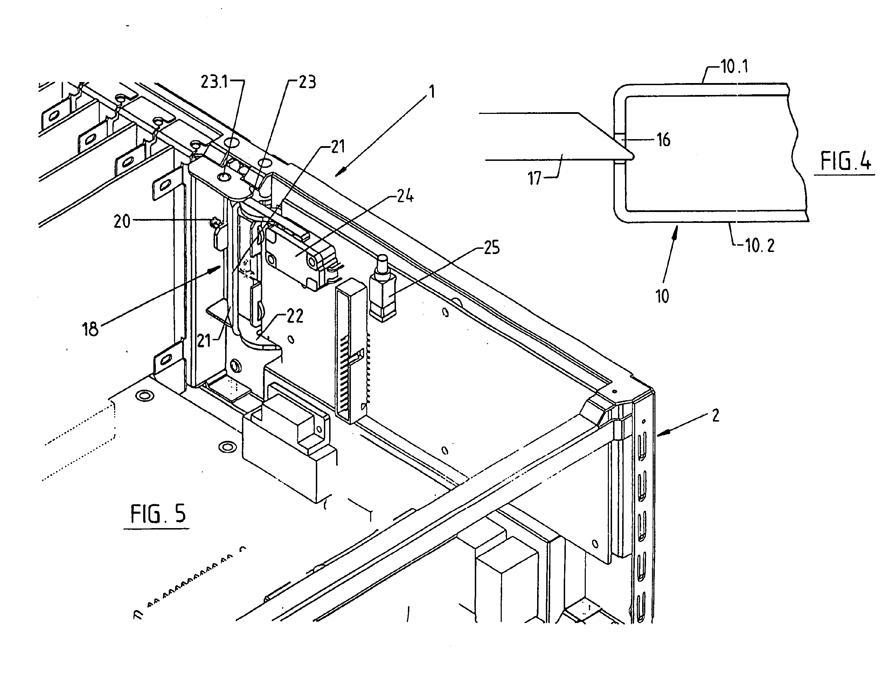

Wie die Figuren 2 und 3 zeigen, kann das Segment 6 zunächst durch Wegschwenken (Figur 2) und anschließend durch Abnehmen (Figur 3) vom Gehäuse 2 entfernt werden. Hierfür ist das in Draufsicht rechteckförmige und mit den längeren Seiten parallel zur Ober- bzw. Unterseite des Gehäuses 2 in der Ausnehmung 11 angeordnete Segment 6 an einer Schmalseite, d.h. bei der für die Figuren 1 - 3 gewählten Darstellung an der linken dem Mehrfachanschlußelement 13 entfernt liegenden Schmalseite, an der sich auch die Anschlüsse 7 hauptsächlich befinden, mit zwei über diese Schmalseite wegstehenden Laschen 14 versehen, von denen jede bei am Gehäuse 2 gehaltenen Segment 6 in eine gehäuseseitige Öffnung 15 eingreift. An der den Laschen 14 gegenüberliegenden Schmalseite ist das Gehäuse 10 mit zwei Öffnungen 16 versehen, in die bei an der Gehäuserückseite befestigtem Segment jeweils eine federnde Rast 17 einer Ver- und Entriegelungseinrichtung 18 eingreift, wie dies in der Figur 4 sehr schematisch dargestellt ist.

Die Ver- und Entriegelungseinrichtung 18 weist u.a. eine an der Außenseite der Gehäuserückseite 2.1 zugängliche Drucktaste 19 auf, die gegen die Wirkung einer Rückstellfeder 20 betätigt werden kann, und zwar zum Schwenken eines Auswerfers 21 in der Weise, daß nicht nur die beiden Rasten 17 außer Eingriff mit der zugehörigen Öffnung 16 kommen, sondern gleichzeitig auch Schwenkarme 22 des Auswerfers 21 gegen die Rückseite 10.2 zur Anlage kommen, und zwar in der Nähe der die Öffnungen 16 aufweisenden Schmalseite des Gehäuses 10 und in unmittelbarer Nähe oberhalb und unterhalb der dortigen, mit dem Mehrfachkontakt 13 zusammenwirkenden Kontakte, so daß beim Betätigen der Drucktaste 19 das Segment 6 entriegelt und an der die Laschen 14 aufweisenden Schmalseite um eine Achse parallel zu dieser Schmalseite derart geschwenkt wird, daß eine Trennung zwischen den Mehrfachkontakten 13 und den zugehörigen Mehfachkontakten an der Rückseite 10.2 erfolgt (Figur 2) und dann anschließend durch Herausziehen der Laschen 14 aus den zugehörigen Aufnahmen 15 eine vollständige Trennung des Segmentes 6 von dem Gehäuse 2 möglich ist.

Diese Ausbildung hat den Vorteil, daß bei einem eventuellen Defekt des Gerätes 1 dieses Gerät ausgetauscht werden kann, ohne daß ein Lösen der Verbindungen an den Anschlüssen 7 und 8, insbesondere aber an den Anschlüssen 4 erforderlilch ist.

Die Anschlüsse 4 können an sich beliebig belegt werden. Die Belegung wird aber vor der Inbetriebnahme des Systems entsprechend konfiguriert und ist auch bei der Programmierung des Gesamtsystems berücksichtigt. Bei einer Trennung der elektrischen Verbindungen an den Anschlüssen 4 beim Auswechseln des Gerätes 1 müßte anschließend in recht aufwendiger Weise die Verbindung mit der Vielzahl der Kameras wieder in der ursprünglichen Belegung hergestellt werden. Bei der dargestellten Ausführungsform erfolgt das Austauschen des Gerätes 1 gegen ein gleichartiges Gerät dadurch, daß unter Beibehaltung sämtlicher äußerer Verbindungen mit den Anschlüssen 4, 7 und 8 das Segment 6 von einem Gerät abgenommen und an das neue Gerät angedockt wird, so daß dann automatisch trotz eines Austausches der Geräte die Belegung der Anschlüsse beibehalten bleibt.

Die Befestigung des Deckels 3 erfolgt in an sich bekannter Weise unter Verwendung von Schrauben. Hierfür sind am Gehäuse 2 Befestigungslaschen 23 mit Gewinden vorgesehen. Um ein unbefugtes Öffnen des Gehäuses 2 und damit auch Manipulationen innerhalb des Gehäuses 2 zu vermeiden, sind mehrere Sabotageschalter 24 und 25 vorgesehen, und zwar wenigstens ein Sabotageschalter 24, der mit einem mechanischen Schalterarm 24.1 das Vorhandensein einer Befestigungsschraube an der Gewindebohrung 23.1 der Befestigungslasche 23 überwacht und beim Entfernen dieser Befestigungsschraube ein Alarmsignal liefert, welches die Abgabe eines akustischen und/oder optischen Alarms am Überwachungssystem, beispielsweise an einer Zentrale dieses Systems veranlaßt.

Weitere Sabotageschalter 25 sind zwischen den Befestigungspunkten des Deckels 3 am Gehäuse 2 vorgesehen. Diese Sabotageschalter 25 sind bei der dargestellten tasterartig ausgebildet und liegen mit einem Schalterelement 25.1 gegen die Innenfläche des Deckels 3 derart an, daß beim Entfernen oder Anheben des Deckels 3 ebenfalls ein Alarmsignal erzeugt wird.

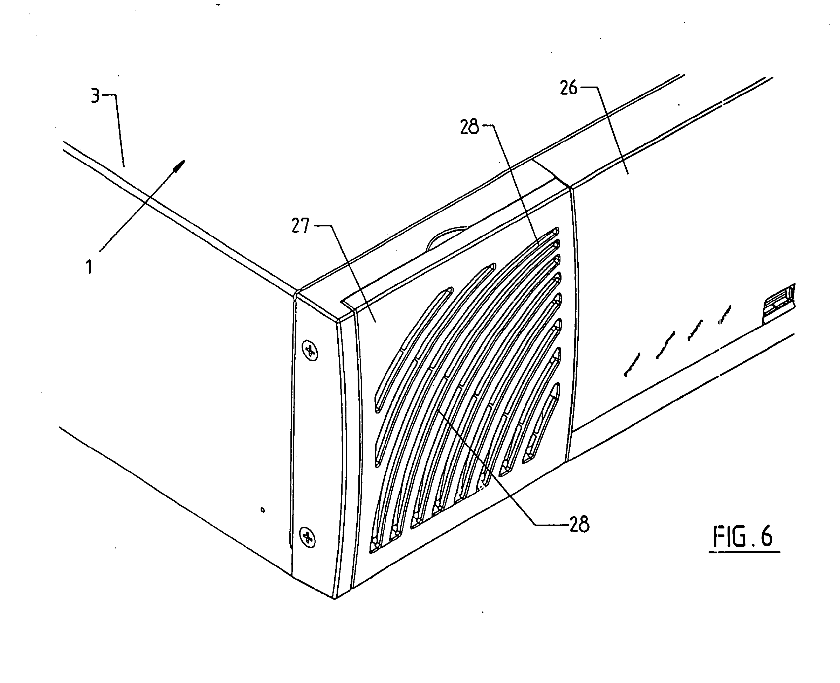

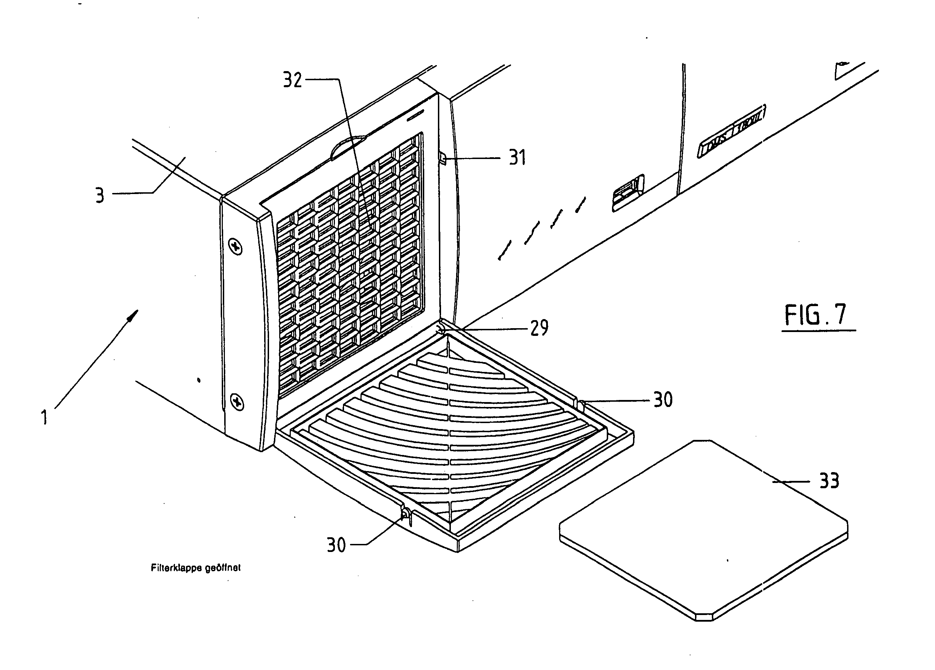

Die Figuren 6 und 7 zeigen die Vorderseite 2.2 des Gehäuses 2. Diese Vorderseite, an der verschiedene Anzeige und andere Funktionselement des Gerätes 1 vorgesehen sind, ist bei der dargestellten Ausführungsform von einem Formteil 26 aus Kunststoff gebildet. An diesem Frontteil 26 ist eine Blende 27 mit Lüftungsschlitzen 28 vorgesehen, und zwar ebenfalls in Form eines Formteils aus Kunststoff. Die Blende 27 ist mittels angeformter Zapfen 29 um eine Achse parallel zur Unterseite des Gehäuses 2 schwenkbar am Frontteil 26 gehalten. Weiterhin ist die Blende 27 mit angeformten Rasten 30 versehen, die bei geschlossener Blende in Gegenrasten 31 am Frontteil 26 einrasten, so daß die geschlossene Blende 27 mit ihrer Außenfläche die Fortsetzung der Außenfläche des Frontteils 26 bildet.

Hinter der Blende 27 bildet das Frontteil 26 eine Lüftungsöffnung 33 mit einer gitterartigen Struktur, und zwar in der Art, daß zwischen dieser gitterartigen Struktur und der geschlossenen Blende 27 ein Raum zur Aufnahme eines auswechselbaren Luftfilters 33 aus einem flachen Filtermaterial gebildet ist. Durch diese Ausführung besteht die Möglichkeit das Luftfilter 33 im Bedarfsfall problemlos, insbesondere auch ohne ein Öffnen des Gerätes 1 und ohne einen Ausbau dieses Gerätes aus einer Gesamtanlage zu erneuern.

Die Erfindung wurde voranstehend an einem Ausführungsbeispiel beschrieben. Es versteht sich, daß zahlreiche Änderungen sowie Abwandlungen im Rahmen der Patentansprüche möglich sind.

### Bezugszeichenliste

- 1: Gerät
- 2: Gehäuse
- 2.1: Gehäuserückseite
- 2.2: Gehäusevorderseite
- 3: Gehäusedeckel
- 4: Anschluß für Videokamera
- 5: Anschlußfeld
- 6: Gehäusesegment
- 7, 8: Anschluß
- 9: Sensoranordnung
- 10: Gehäuse des Segmentes
- 10.1: Gehäusevorderseite
- 10.2: Gehäuserückseite
- 11: Ausnehmung
- 12: Gehäusewand
- 13: Mehrfachanschluß
- 14: Lasche
- 15: Öffnung
- 16: Öffnung
- 17: Rast
- 18: Ver- und Entriegelungseinrichtung
- 19: Drucktaste
- 20: Feder
- 21: Auswerfer
- 22: Schwenkarm
- 23: Befestigunslasche
- 23.1: Gewindebohrung
- 24, 25: Sabotageschalter
- 26: Frontteil des Gehäuses
- 27: Blende
- 28: Lüftungsöffnung
- 29: Schwenkzapfen
- 30: Rast
- 31: Gegenrast
- 32: Lüftungsöffnung mit Gitterstruktur

## Patentansprüche

1. Videoüberwachungssystem mit einer Vielzahl von Videokameras, die jeweils mit einem Einzeianschiuss an einem Anschlussfeld (5) eines Gerätes (1) des Überwachungssystems verbunden sind,
wobei das Anschlussfeld (5) an einem in einer Ausnehmung des Gerätegehäuses (2) aufgenommenen flachen, quaderförmigen Segment (6) vorgesehen ist, und einen Teil der Außenfläche einer Gerätegehäusewand bildet,
wobei an dem Segment (6) zusätzlich Mehrfachkontakte vorgesehen sind, die bei am Gerätegehäuse befestigtem Segment (6) mit geräteseitigen Mehrfachkontakten (13) lösbar verbunden sind,
wobei die äußeren Einzel-Anschlüsse (4) des Anschlussfeldes (5) mit den segmentseitigen Mehrfachkontakten elektrisch verbunden sind,
wobei die Ausnehmung (11) durch eine Trennwand zum Innenraum des Gerätegehäuses (2) verschlossen ist, und
wobei die geräteseitigen Mehrfachkontakte (13) an der Trennwand (12) vorgesehen sind.

2. Videoüberwachungssystem nach Anspruch 1, **dadurch gekennzeichnet, dass** das das Anschlussfeld bildende Segment (6) an der den geräteseitigen Mehrfachanschlüssen (13) entfernt liegenden Schmalseite mit über diese Schmalseite wegstehenden Laschen (14) versehen, mit diesen Laschen in geräteseitige Öffnungen (15) einsetzbar und an der gegenüberliegenden Schmalseite mit federnden Rasten (17) an einer gerätegehäuseseitigen Ver- und Entriegelungseinrichtung (18) lösbar verriegelbar ist.

3. Videoüberwachungssystem nach Anspruch 1 oder 2, **dadurch gekennzeichnet, dass** der Innenraum des Gehäuses (2) durch wenigstens ein abnehmbares Gehäuseteil (3) verschlossen ist, und dass am Gehäuse Sabotage-Sensoren, beispielsweise Sabotage-Schalter (24, 25) vorgesehen sind, die beim Lösen der Befestigung für den Deckel (3) und/oder beim Anheben des Deckels von dem übrigen Gehäuse (2) ein Signal liefern, beispielsweise zur Veranlassung eines optischen und/oder akustischen Alarms.

4. Videoüberwachungssystem nach einem der vorhergehenden Ansprüche, **dadurch gekennzeichnet, dass** die äußeren Anschlüsse (4) des Anschlussfeldes (5) mit den segmentseitigen Mehrfachkontakten über Leitungen oder Leiterbahnen des Segmentes (6) elektrisch verbunden sind.

5. Videoüberwachungssystem nach einem der vorhergehenden Ansprüche, **dadurch gekennzeichnet, dass** wenigstens ein Teil der äußeren Anschlüsse (4, 7, 8) elektrische Eingänge für Überwachungselemente, beispielsweise für Video-Kameras sind.

6. Videoüberwachungssystem nach einem der vorhergehenden Ansprüche, **dadurch gekennzeichnet, dass** die segmentseitigen Mehrfachkontakte sowie die gehäuseseitigen Mehrfachkontakte (13) jeweils von Mehrfachsteckern oder Mehrfachsteckerbuchsen gebildet sind.

7. Videoüberwachungssystem nach einem der vorhergehenden Ansprüche, **dadurch gekennzeichnet, dass** das abnehmbare an das Anschlussfeld (5) aufweisende Segment an einer Rückseite (2.1) des Gehäuses (2) vorgesehen ist.

8. Videoüberwachungssystem nach einem der vorhergehenden Ansprüche, **dadurch gekennzeichnet, dass** an einer Seite des Gehäuses, vorzugsweise an der Frontseite eine Lüftungsöffnung (32) mit einer von der Frontseite her auswechselbaren Luftfilter (33) vorgesehen ist.

## Claims

1. Video monitoring system with a plurality of video cameras which are each connected to an individual connector on a connector panel (5) of an appliance (1) of the monitoring system, wherein the connector panel (5) is provided on a flat segment block (6) housed in a recess in the appliance housing (2) and forms a part of the outside surface of a wall of the appliance housing wherein on the segment block (6) there are in addition multi contacts which when the segment block (6) is fixed on the appliance housing are connected detachably to the multi contacts (13) on the appliance side, wherein the outer individual plugs (4) of the connector panel (5) are connected electrically to the multi contacts on the segment side, wherein the recess (11) is closed by a partition wall from the interior space of the appliance housing (2), and wherein the multi contacts (13) on the appliance side are provided on the partition wall (12).

2. Video monitoring system according to claim 1 **characterised in that** the segment (6) forming the connector panel is provided on the narrow side remote from the multi contacts (13) on the appliance side with lugs (14) which protrude beyond this narrow side, can be inserted by these lugs into openings (15) on the appliance side, and can be detachably locked on the opposing narrow side with resilient catches (17) on a locking and unlocking mechanism (18) provided on the side of the appliance housing.

3. Video monitoring system according to claim 1 or 2 **characterised in that** the interior space of the housing (2) is closed by at least one removable housing part (3) and that on the housing sabotage sensors, such as sabotage switches (24, 25), are provided which when the fastening for the cover (3) is released and/or when the cover is lifted from the rest of the housing (2) supply a signal, by way of example to trigger an optical and/or acoustic alarm.

4. Video monitoring system according to one of the preceding claims **characterised in that** the outer connectors (4) of the connector panel (5) are connected electrically to the multi contacts on the segment side by leads or conductor paths of the segment (6).

5. Video monitoring system according to one of the preceding claims **characterised in that** at least a part of the outer connectors (4, 7, 8) are electrical inputs for monitoring elements, by way of example for video cameras.

6. Video monitoring system according to one of the preceding claims **characterised in that** the multi contacts on the segment side as well as the multi contacts (13) on the housing side are each formed by multi plugs or multi sockets.

7. Video monitoring system according to one of the preceding claims **characterised in that** the removable segment block having the connector panel (5) is provided on a rear side (2.1) of the housing (2).

8. Video monitoring system according to one of the preceding claims **characterised in that** a ventilation opening (32) which has an air filter (33) which is replaceable le from the front is provided on a side of the housing, preferably on the front side thereof.

## Revendications

1. Système de surveillance vidéo avec une pluralité de caméras vidéo qui sont respectivement reliées à un connecteur simple au niveau d'un panneau de connecteurs (5) d'un appareil (1) du système de surveillance,
le panneau de connecteurs (5) étant prévu sur un segment (6) parallélépipédique plat réceptionné dans une cavité du boîtier d'appareil (2), et formant une partie de la surface extérieure d'une paroi de boîtier d'appareil, au niveau du segment (6), des contacts multiples étant prévus de manière additionnelle, lesquels sont reliés de manière détachable à des contacts multiples (13) côté appareil lorsque le segment (6) est fixé au boîtier d'appareil,
les connecteurs simples extérieurs (4) du panneau de connecteurs (5) étant reliés électriquement aux contacts multiples côté segment,
la cavité (11) étant fermée par rapport à l'espace intérieur du boîtier d'appareil (2) par une paroi de séparation, et
les contacts multiples côté appareil (13) étant prévus sur la paroi de séparation (12).

2. Système de surveillance vidéo selon la revendication 1, **caractérisé en ce que**, sur le côté étroit se trouvant à distance des contacts multiples côté appareil (13), le segment (6) formant le panneau de connecteurs est pourvu de languettes (14) en saillie sur ce côté étroit, qu'à l'aide de ces languettes, il peut être introduit dans des ouvertures côté appareil (15) et qu'il peut être verrouillé de manière détachable sur le côté étroit opposé avec des crans d'arrêt (17) agissant comme des ressorts sur un dispositif de verrouillage et de déverrouillage (18) côté boîtier d'appareil.

3. Système de surveillance vidéo selon la revendication 1 ou 2, **caractérisé en ce que** l'espace intérieur du boîtier (2) est fermé par au moins une partie de boîtier détachable (3) et **en ce que**, sur le boîtier, sont prévus des capteurs de sabotage, par exemple des interrupteurs de sabotage (24, 25) qui, lors de la libération de la fixation du couvercle (3) et/ou lorsque le couvercle est soulevé depuis le reste du boîtier (2), délivrent un signal, par exemple pour déclencher une alarme optique et/ou sonore.

4. Système de surveillance vidéo selon l'une quelconque des revendications précédentes, **caractérisé en ce que** les connecteurs extérieurs (4) du panneau de connecteurs (5) sont reliés électriquement aux contacts multiples côté segment par le biais de circuits ou de pistes conductrices du segment (6).

5. Système de surveillance vidéo selon l'une quelconque des revendications précédentes, **caractérisé en ce qu'**au moins une partie des connecteurs extérieurs (4, 7, 8) sont des entrées électriques pour des éléments de surveillance, par exemple pour des caméras vidéo.

6. Système de surveillance vidéo selon l'une quelconque des revendications précédentes, **caractérisé en ce que** les contacts multiples côté segment, ainsi que les contacts multiples côté boîtier (13) sont respectivement constitués de fiches multiples ou de prises femelles multiples.

7. Système de surveillance vidéo selon l'une quelconque des revendications précédentes, **caractérisé en ce que** le segment détachable se trouvant sur le panneau de connecteurs (5) est prévu sur un côté arrière (2.1) du boîtier (2).

8. Système de surveillance vidéo selon l'une quelconque des revendications précédentes, **caractérisé en ce que**, sur un côté du boîtier, de préférence sur le côté frontal, est prévue une ouverture d'aération (32) avec un filtre à air (33) pouvant être changé depuis le côté frontal.
